# EUROPEAN PATENT APPLICATION

(11) **EP 3 480 442 A1**
(43) Date of publication of application: **08.05.2019**
(21) Application number: 17199777.8
(22) Date of filing: 02.11.2017
(51) Int. Cl.: F02C 7/264

(54) **OPTICAL APPARATUS**

(71) Applicant: Siemens Aktiengesellschaft, 80333 München (DE)
(72) Inventor: Griffiths, Jonathan, Lincoln, LN1 3HN (GB); Kirk, Anthony, Lincoln (GB); Ruijsenaars, Herman, Lincoln, LN1 2WT (GB)
(74) Representative: Maier, Daniel Oliver

(57) **Abstract**

An optical apparatus 50 for a gas turbine, for ignition of fuel therein, is described. The apparatus 50 comprises an optical member 60 arrangeable in a first configuration to reflect, in use, a first laser pulse LP1 incident thereupon, thereby defining, at least in part, a first optical path P1 through an optical transmission medium M to the gas turbine, wherein the optical transmission medium M comprises an optically homogeneous transmission medium, preferably a gas.

## Description

The present disclosure relates to an optical apparatus.

In particular the disclosure is concerned with an optical apparatus for an internal combustion engine, such as a gas turbine, for ignition of fuel therein.

### Background

Gas turbines typically combust gas and/or liquid fuel, including bio-fuels such as biogas and/or bio-oil. Emission regulations typically require gas turbines to operate at lean fuel/air mixtures, to reduce combustion temperatures and hence lower emissions. Successful ignition of such lean mixtures requires relatively high energies. These relatively high energies are problematic for conventional electrical spark igniters, eroding electrodes thereof and hence reducing their operational lifetimes. Replacement of such conventional igniters requires shutdown of the gas turbines, resulting in loss of availability and/or power output therefrom. Typically, gas turbines include a plurality of combustors, each including a respective conventional igniter. Failure of any one of these plurality of igniters results in failed ignition. Ignition success (also known as start reliability) of gas turbines is typically only in a range from 85% to 95%. Ignition failures result in fault reports and/or fault investigations. In addition, structural failure of a conventional igniter, such as breakage of an electrode thereof, may result in catastrophic failure of a gas turbine attributable to domestic object damage (DOD) and/or foreign object damage (FOD) of downstream hot gas path components by collision of the broken electrode with a turbine blade and/or a vane.

Hence, there is a need to improve ignition of fuel in internal combustion engines, for example gas turbines.

### Summary

According to the present disclosure there is provided an optical apparatus, an optical assembly, a gas turbine and a method of installing an optical assembly as set forth in the appended claims. Other features of the invention will be apparent from the dependent claims, and the description which follows.

According to a first aspect, there is provided an optical apparatus for a gas turbine, for ignition of fuel therein, the apparatus comprising:
an optical member arrangeable in:
   a first configuration to reflect, in use, a first laser pulse incident thereupon, thereby defining, at least in part, a first optical path through an optical transmission medium to the gas turbine;
   wherein the optical transmission medium comprises an optically homogeneous transmission medium, preferably a gas.

In this way, the fuel in the gas turbine may be reliably ignited, providing successful ignition of lean fuel/air mixtures. Since conventional electrical spark igniters are thus not required for ignition of the fuel, shutdown of the gas turbine to replace such conventional igniters is not required. Further, since the fuel in the gas turbine may be reliably ignited, failure of any one of conventional igniters, resulting in failed ignition, is avoided. In addition, structural failure of conventional igniter, resulting in catastrophic failure of the gas turbine due to DOD and/or FOD attributable to disintegrated igniter, is avoided. In this way, start reliability of the gas turbine may be improved. In this way, a number of fault reports and/or fault investigations may be reduced. In this way, a requirement for servicing of the gas turbine may be reduced.

Particularly, since the first laser pulse is transmitted to the gas turbine through the optically homogeneous transmission medium, there is reduced and/or no loss of transmitted power of the first laser pulse, for example approaching 100% effective first pulse energy transmission. In this way, power requirements and hence cost of a laser for providing the first laser pulse may be reduced. In contrast, transmission of laser pulses via optical fibres (i.e. heterogeneous transmission media), for example, results in loss of transmitted power due, in part, to refraction and/or internal reflection within the optical fibres. Further, since the first laser pulse is transmitted to the gas turbine through the optically homogeneous transmission medium, beam quality of the laser pulse is better maintained, for example with no deterioration in beam quality, since interfaces between heterogeneous transmission media are avoided. In contrast, transmission of laser pulses via optical fibres, for example, results in deterioration in beam quality, in part, to refraction and/or internal reflection within the optical fibres. Furthermore, since the first laser pulse is transmitted to the gas turbine through the optically homogeneous transmission medium, there is no requirement for manipulation, for example focussing, of the first laser pulse. In contrast, transmission of laser pulses via optical fibres, for example, requires beam manipulation since the optical fibres typically are required to be of a sufficiently large diameter to avoid destruction at the power levels required for fuel ignition.

In one example, the gas comprises and/or is an inert gas, such as nitrogen, carbon dioxide, a noble gas (helium, argon, neon, krypton, xenon or radon) and/or mixtures thereof. In one example, the gas comprises and/or is air.

In one example, the optical member is arrangeable in a second configuration to reflect, in use, a second laser pulse incident thereupon, thereby defining, at least in part, a second optical path through the optical transmission medium. In this way, the first laser pulse may be used to ignite the fuel in a first combustor of the gas turbine, as described above, and the second laser pulse may be used to similarly ignite the fuel in a second, different combustor of the gas turbine, similarly.

In one example, the optical member comprises a mirror and/or a diffraction grating. In one example, the optical member comprises no refractive and/or no diffractive elements. That is, the first laser pulse and/or the second laser pulse may be only reflected by the optical mirror, without refraction and/or diffraction. For example, the optical member may comprise a mirror provided by a highly-polished metal surface, for example an electropolished metal surface and/or an electrodeposited metal surface without any transparent element provided thereon, for example glass.

In one example, the optical member comprises a galvanometric mirror, for example a scanning galvanometric mirror. Generally, galvanometric mirrors are electromechanical devices arranged to rotate mirrors around axes, according to an input current, using a galvanometer arrangement. Fast and precise reflection of laser pulses, through specific, pre-determined angles, are enabled by galvanometric mirrors. In this way, the optical member may be arrangeable, for example accurately, to freely distribute the first laser pulse and/or the second laser pulse, for example within an arcuate radius of the optical member according to its spatial resolution. A regular arrangement, for example of first and second optical paths, may thus not be required. Since movement between the first configuration and the second configuration is provided by the galvanometric mirror, which may be arranged to move quickly therebetween, ignition in a first combustor and a second combustor of the gas turbine may be thus rapidly successive, for example quasi simultaneous.

In one example, the optical member comprises an actuator, arranged to move the optical member from the first configuration to the second configuration and/or vice versa. For example, the actuator of a galvanometric mirror is provided by a galvanometer therein. Other actuators, for example motors such as stepper motors, may be provided for a mirror.

In one example, the apparatus comprises a controller arranged to control the optical member. In this way, the controller may control movement of the optical member from the first configuration to the second configuration and/or vice versa. In this way, a displacement, for example a rotation, of the optical member may be controlled, for example accurately controlled. For example, the controller may be arranged to control a current input to and/or a voltage applied to a galvanometric mirror and thereby control a rotation thereof. For example, the controller may be arranged to control a current input to and/or a voltage applied to an actuator, arranged to move the optical member from the first configuration to the second configuration and/or vice versa.

In one example, the apparatus comprises a first reflective optical member, for example a first mirror, arranged to reflect, in use, the reflected first laser pulse incident thereupon, upon reflection by the optical member arranged in the first configuration, thereby defining, at least in part, the first optical path through the optical transmission medium to the gas turbine. In one example, the first reflective optical member comprises a mirror. In one example, the first reflective optical member comprises no refractive and/or no diffractive elements. That is, the first laser pulse and/or the second laser pulse may be only reflected by the first reflective mirror, without refraction and/or diffraction. For example, the first reflective optical member may comprise a first mirror provided by a highly-polished metal surface, for example an electropolished metal surface and/or an electrodeposited metal surface without any transparent element provided thereon, for example glass. In one example, the apparatus comprises a plurality of such first reflective optical members.

In one example, the apparatus comprises a second reflective optical member, for example a second mirror, arranged to reflect, in use, the reflected second laser pulse incident thereupon, upon reflection by the optical member arranged in the second configuration, thereby defining, at least in part, the second optical path through the optical transmission medium to the gas turbine. The second reflective optical member may be as described with respect to the first reflective optical member, mutatis mutandis.

In one example, the optical member is arrangeable in N configurations to reflect respectively, in use, N laser pulses incident thereupon, thereby defining, at least in part, N optical paths through the optical transmission medium to the gas turbine, where N is a natural number greater than 1, for example 2, 3, 4, 5, 6, 7, 8 or more. In one preferable example, N is equal to the number of combustors in the gas turbine. In one example, the apparatus comprises N reflective optical members, as described above, for the N configurations, respectively.

In one example, the optical member is rotatably arrangeable, for example about an axis. In one example, the optical member is rotatably arrangeable with a resolution of better than 100 µrad, preferably better than 50 µrad, more preferably better than 20 µrad, for example 15 µrad. In one example, the optical member is rotatably arrangeable with a range of motion of at least 10°, preferably at least 20°, more preferably at least 30°. In one example, the optical member is rotatably arrangeable with a range of motion of at most 180°, preferably at most 90°, more preferably at most 60°. In one example, the optical member is arrangeable, for example rotatably arrangeable, with a response time of at most 1 ms, preferably at most 0.75 ms, more preferably at most 0.5 ms, for example 400 µs.

In one example, the optical member has a laser-induced damage threshold (LIDT) of at least 0.1 Jcm⁻², preferable at least 1 Jcm⁻², more preferably at least 2 Jcm⁻², for example 5 Jcm⁻². In one example, the optical member has a laser-induced damage threshold (LIDT) of at most 100 Jcm⁻², preferable at most 50 Jcm⁻², more preferably at most 10 Jcm⁻².

In one example, the first optical path consists of only linear portions thereof. In one example, the optical transmission medium does not include optical fibre.

In one example, the apparatus comprises a ½ wave plate and/or a polarizing beam splitting cube, arranged to attenuate a power of the first laser pulse and/or the second laser pulse.

According to a second aspect, there is provided an optical assembly for a gas turbine for ignition of fuel therein, the assembly comprising:
an optical apparatus according to the first aspect; and
a first housing arranged to house, at least in part, the optical transmission medium along the first optical path.

That is, the first housing provides an inlet passageway for the first laser pulse transmitted therethough in the optical transmission medium along the first optical path. In this way, the first housing may shroud and/or shield the first laser pulse from an external ambient environment. In this way, exposure and/or injury due to the first laser pulse may be prevented, since the laser pulse may be effectively isolated therein during transmission along the first optical path to the gas turbine.

In one example, the first housing comprises a tubular member, for example a pipe having a circular cross-section, thereby providing the inlet passageway for the first laser pulse transmitted therethough in the optical transmission medium along the first optical path while a wall of the tubular member provides a shroud and/or shield.

In one example, the first housing comprises an optical inlet, for example a first aperture or a first window, for the first laser pulse provided by the optical apparatus. In one example, the optical inlet comprises an inlet passageway, whereby the first housing is in fluid communication with the optical apparatus. In this way, the optical transmission medium remains homogeneous. In one example, the first housing comprises an optical outlet, for example a second aperture or a second window, for the first laser pulse transmitted to the gas turbine. In one example, the first housing comprises an inlet and an outlet, as described previously. In one example, the first housing comprises no other optical inlets and/or outlets. In this way, light is prevented from entering or exiting the first housing otherwise.

In one example, the first housing is coupled to the optical apparatus, for example mechanically coupled thereto at one end thereof, having an optical inlet, as described above, therein. In one example, the first housing is coupled to the gas turbine, for example mechanically coupled thereto at an opposed end thereof, having an optical outlet, as described above, therein. In one example, the first housing is coupled to the optical apparatus, for example mechanically coupled thereto at one end thereof, and the first housing is coupled to the gas turbine, for example mechanically coupled thereto at an opposed end thereof.

In one example, the first housing comprises a first coupling member arranged to moveably couple a first part of the first housing and a second part of the first housing. In this way, the first housing may be adjusted, for example customised including onsite for an existing gas turbine, according to an arrangement, for example a physical configuration, of the optical apparatus and the gas turbine. In one example, the first housing comprises a passageway therethrough for the first optical path.

In one example, the first coupling member may be arranged to slidably couple the first part of the first housing and the second part of the first housing thereto, whereby a dimension, for example a length, of the first housing may be adjusted. For example, the first coupling member may comprise a telescopic coupling member or bellows.

In one example, the first coupling member is arranged to articulate and/or rotatably couple the first part of the first housing and the second part of the first housing.

In one example, the first coupling member is arranged to articulate and/or rotatably couple the first part of the first housing and the second part of the first housing, whereby relative rotation of the first part of the first housing and the second part of the first housing about a mutual axis thereof, for example a mutual longitudinal axis thereof, is provided. That is, the first part of the first housing and the second part of the first housing are coaxial and the first part of the first housing may be twisted relative to the second part of the first housing. In this way, an end of the first housing may be threaded into the optical apparatus, for example, without rotating the other end of the first housing.

In one example, the first coupling member is arranged to articulate and/or rotatably couple the first part of the first housing and the second part of the first housing, whereby relative rotation of the first part of the first housing and the second part of the first housing about a transverse axis thereto, for example orthogonal to a longitudinal axis thereof, is provided. In this way, the first part of the first housing and the second part of the first housing may be mutually rotatably or angularly displaced i.e. articulated. That is, the first part of the first housing and the second part of the first housing are not coaxial and the first part of the first housing may be rotated and/or revolved relative to the second part of the first housing. In other words, the first housing comprises and/or is an articulatable first housing. In one example, the first coupling member comprises an articulatable coupling member, as described herein. In this way, the first housing may be articulated and/or adjusted, for example customised, according to an arrangement, for example a physical configuration, of the optical apparatus and the gas turbine. In one example, the first coupling member is arranged to define a first axis of rotation about which the first part of the first housing and the second part of the first housing are mutually rotatably or angularly displaced. For example, the first coupling member may provide an elbow joint, articulatable in one plane. In one example, the first coupling member is arranged to define a second such axis of rotation, orthogonal to the first axis of rotation. For example, the first coupling member may provide a shoulder joint, articulatable in two mutually-orthogonal planes. In one example, the first coupling member is arranged to define a third such axis of rotation, orthogonal to the first and second axes of rotation. For example, the first coupling member may provide a swivel or ball joint, articulatable in three mutually-orthogonal planes.

In one example, the first housing comprises:
a first articulatable reflective optical member arranged to reflect the first laser pulse, thereby defining, at least in part, the first optical path through the optical transmission medium therein.

In one example, the first articulatable reflective optical member is arranged in the first coupling member to reflect the first laser pulse along the first optical path from the first part of the first housing into the second part of the first housing. In this way, the first coupling member may be articulated, as described above, and the first articulatable reflective optical member may reflect the first laser pulse according to the articulation of the first coupling member. In one example, the first articulatable reflective optical member comprises a mirror. In one example, the first articulatable reflective optical member comprises no refractive and/or no diffractive elements. That is, the first laser pulse may be only reflected by the first articulatable reflective mirror, without refraction and/or diffraction. For example, the first articulatable reflective optical member may comprise a first articulatable mirror provided by a highly-polished metal surface, for example an electropolished metal surface and/or an electrodeposited metal surface without any transparent element provided thereon, for example glass. In one example, the first articulatable reflective optical member is arranged to rotate about a first axis and/or a second axis of rotation defined by the first coupling member, for example as the first coupling member is rotated thereabout. In one example, a reflective surface of the first articulatable reflective optical member is coincident with a first axis and/or a second axis of rotation defined by the first coupling member. In one example, a region, for example a point, of a reflective surface of the first articulatable reflective optical member is rotationally invariant upon rotation of the first coupling member. For example, the point remains in a same three dimensional position upon rotation of the first coupling member while an angle of orientation of the first articulatable reflective optical member changes according to the rotation of the first coupling member. In this way, the first laser pulse is reflected by the first articulatable reflective optical member from the first part of the first housing to the second part of the first housing, for example along axes thereof, independently of relative rotation thereof.

In one example, the optical member is arrangeable in N configurations to reflect respectively, in use, N laser pulses incident thereupon, thereby defining, at least in part, N optical paths through the optical transmission medium to the gas turbine, where N is a natural number greater than 1, for example 2, 3, 4, 5, 6, 7, 8 or more, and the assembly comprises N respective first housings, as described above with respect to the first housing. In one preferable example, N is equal to the number of combustors in the gas turbine.

In one example, the assembly comprises:
a first optical probe arranged to, in use, define a first optical focal point of the reflected first laser pulse within the gas turbine for ignition of the fuel in a first region therein.

In this way, the fuel in the first region in the gas turbine, for example in a first combustor thereof, may be ignited.

In one example, the first optical probe comprises:
a body having a passageway arranged therethrough;
an optical focussing member arranged in the passageway to define the first optical focal point in a region therebeyond; and
a first optical window arranged in the passageway between the optical focussing member and the optical focal point;
wherein the probe comprises a first sealing member arranged between the first optical window and the body to isolate the passageway.

In one example, the assembly comprises N optical probes, as described above with respect to the first optical probe, for N first housings, respectively.

In one example, the assembly comprises no refractive optical elements other than the optical focussing member. In this way, a quality of the first laser pulse may be maintained.

In one example, the assembly comprises a laser arranged to provide the first laser pulse. In one example, the laser is a solid-state laser, for example a Q-switched solid state laser or a Nd:YAG solid-state laser. Examples of suitable lasers include flashlamp or diode pumped Q-switched Nd:YAG lasers and vertical-cavity surface-emitting laser (VCSEL) end-pumped passively Q-switched Nd:YAG/Cr4+ microlasers.

In one example, the first laser pulse has a wavelength in a range from 532 nm to 1064 nm (i.e. visible to near-infrared). In one example, the first laser pulse has a duration in a range from 0.1 ns to 100 ns, preferably in a range from 0.5 ns to 30 ns, more preferably in a range from 1 ns to 30 ns, most preferably in a range from 1 ns to 10 ns, for example 4 ns. In one example, the first laser pulse has an energy in a range from 1 mJ to 1000 mJ, preferably in a range from 10 mJ ns to 750 mJ, more preferably in a range from 100 mJ to 500 mJ, for example 290 mJ. The laser may be arranged to provide such pulses at a rate of at least 1 Hz, preferably at least 2 Hz, more preferably at least 5 Hz, for example 10 Hz. A wavelength, pulse duration, pulse energy and/or beam quality should be such that a laser pulse is capable of producing an intensity at focus in excess of that required for laser induced breakdown of the transmissive medium, typically greater than 1x10¹² W/cm².

In one example, the first laser pulse has a beam quality factor M² of at most 5, preferably at most 4, more preferably at most 3, most preferably at most 2.

In one example, the first optical path consists of only linear portions thereof. In one example, the optical transmission medium does not include optical fibre.

According to a third aspect, there is provided a gas turbine comprising an optical apparatus according to the first aspect or an optical assembly according to the second aspect.

In one example, the first optical path consists of only linear portions thereof. In one example, the optical transmission medium does not include optical fibre.

According to a fourth aspect, there is provided a method of installing an optical assembly according to the second aspect in a gas turbine comprising a first electrical igniter, the method comprising:
removing the first electrical igniter from the gas turbine; and
replacing the removed first electrical igniter with the first optical probe.

In this way, laser ignition provided by the optical assembly may be provided as an upgrade or retrofit for an existing gas turbine.

### Brief Description of the Drawings

Examples of the present disclosure will now be described with reference to the accompanying drawings, in which:
Figure 1 schematically depicts a longitudinal section of a typical gas turbine;
Figure 2A schematically depicts a longitudinal section of a typical combustor and Figure 2B schematically depicts a section along line III-III in Figure 2A;
Figures 3 schematically depicts a perspective view of an optical apparatus according to an exemplary embodiment;
Figures 4A and 4B schematically depicts a plan view and a longitudinal cross-section view of the optical apparatus of Figure 3, respectively;
Figure 5 schematically depicts a perspective view of another optical apparatus according to an exemplary embodiment;
Figures 6A and 6B schematically depict left and right perspective views of a gas turbine comprising an optical assembly comprising the optical apparatus of Figure 5, according to an exemplary embodiment;
Figure 7 schematically depicts a front elevation view of the gas turbine comprising the optical assembly of Figures 6A and 6B;
Figure 8 shows a photograph of part of another optical assembly according to an exemplary embodiment, in use;
Figures 9 schematically depicts a perspective view of an optical probe according to an exemplary embodiment;
Figures 10 schematically depicts a longitudinal cross-section view of the optical probe of Figure 9;
Figures 11A and 11B schematically depict the optical probe of Figure 3, in use;
Figure 12 schematically depicts a method of installing an optical assembly according to an exemplary embodiment.

### Detailed Description

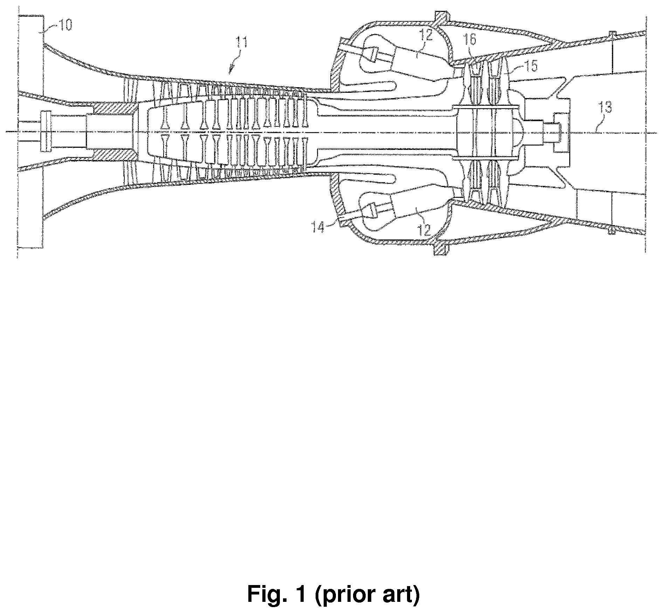

Figure 1 shows an example of a typical gas turbine arrangement. The gas turbine comprises an air inlet 10 at one end followed by a compressor stage 11 in which incoming air is compressed for application to one or more combustors 12, which are distributed circumferentially around the turbine axis 13. Fuel is introduced into the combustors at 14 and is there mixed with a part of the compressed air leaving the compressor stage 11. Hot gases created by combustion in the combustors are directed to a set of turbine blades 15, being guided in the process by a set of guide vanes 16, and the turbine blades 15 and the shaft forming the axis 13 are turned as a result. The turbine blades 15 in turn rotate the blades of the compressor stage 11, so that the compressed air is supplied by the gas turbine itself once this is in operation.

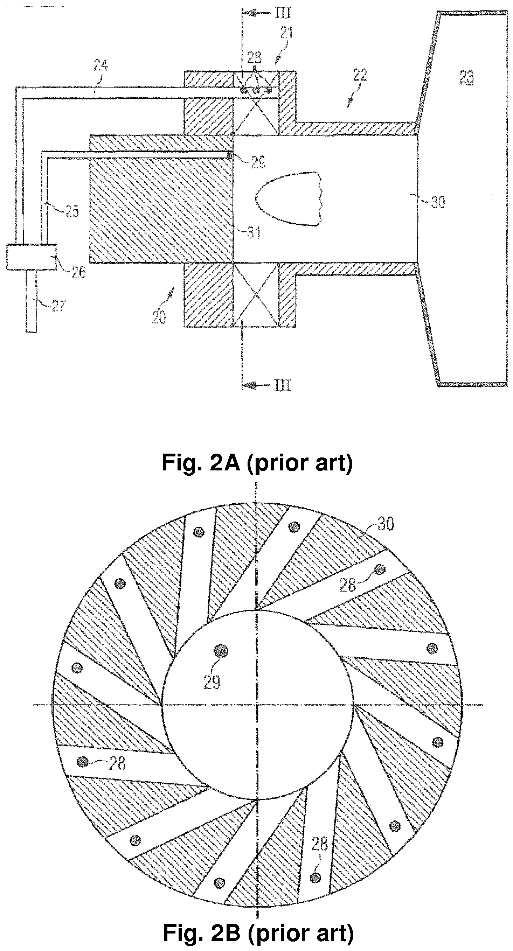

Part of a typical combustor is shown in Figure 2A. Figure 2B shows a section along a line III-III shown in Figure 2A. The combustor is in four parts: a front-end part 20, a swirler part 21, a burner pre-chamber part 22 and a combustion volume 23. Main fuel is introduced into the swirler 21 by way of the front-end part 20 through a conduit 24, while pilot fuel enters the burner space through a conduit 25 having at its end a pilot-fuel nozzle 29. The main and pilot fuel-flows are derived from a fuel-split valve 26, which is fed with a fuel supply 27 representing the total fuel supply to the combustor. The main fuel flow enters the swirler through a set of main-fuel nozzles (or injector) 28, from where it is guided along swirler vanes 30, being mixed with incoming compressed air in the process. The fuel may be gaseous fuel or liquid fuel. The resulting air/fuel mixture maintains a burner flame 30. The hot air from this flame enters the combustion volume 23. A gas turbine will often comprise a number of such combustors.

Generally, the optical apparatus and/or optical assembly described herein are for Dry Low Emissions (DLE) gas turbines, as described above. For conventional diffusion flame combustion systems (such as those of the non Dry Low Emissions (DLE) type), the pilot fuel flow system may be omitted but the applicability of a laser ignitor, such as described herein, which is physically and functionally interchangeable with conventional high energy spark ignitors when supplied with its attendant laser source and distribution system, provides a relevant and/or valid alternative ignition system.

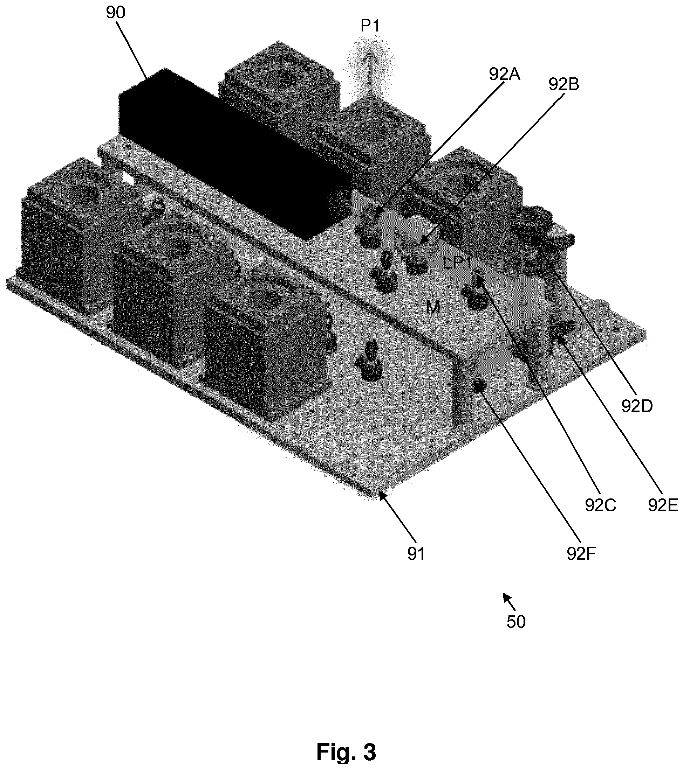

Figures 3 schematically depicts a perspective view of an optical apparatus 50 according to an exemplary embodiment.

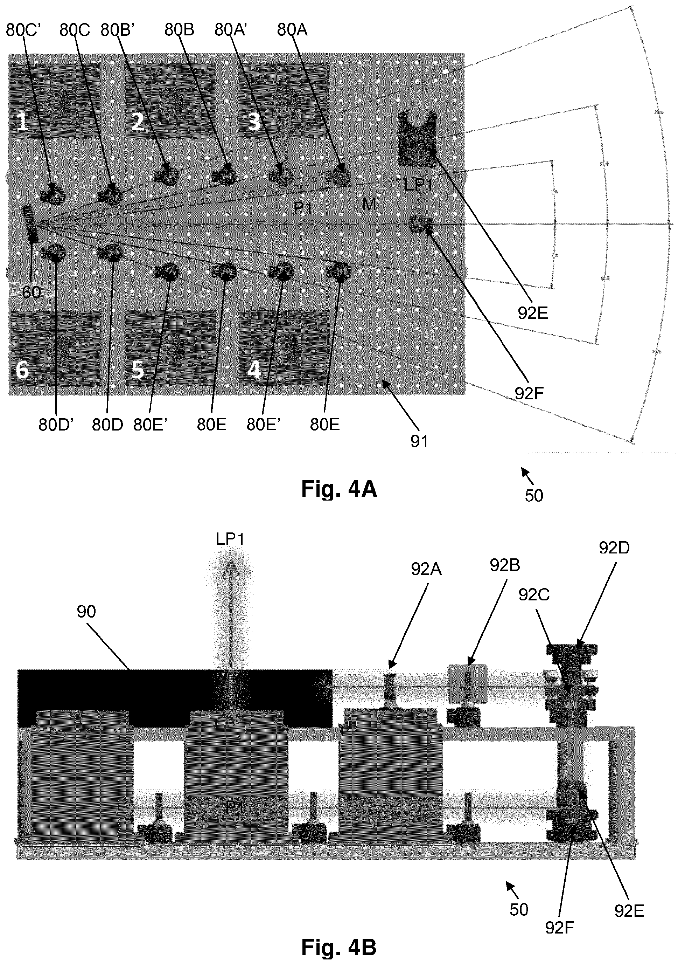

Figures 4A and 4B schematically depicts a plan view and a longitudinal cross-section view of the optical apparatus 50 of Figure 3, respectively.

Particularly, the optical apparatus 50 is for a gas turbine, for ignition of fuel therein. The apparatus 50 comprises an optical member 60 arrangeable in a first configuration to reflect, in use, a first laser pulse LP1 incident thereupon, thereby defining, at least in part, a first optical path P1 through an optical transmission medium M to the gas turbine, wherein the optical transmission medium M comprises an optically homogeneous transmission medium, preferably a gas.

In this way, the fuel in the gas turbine may be reliably ignited, providing successful ignition of lean fuel/air mixtures, as described above.

The optical member 60 is arrangeable in a second configuration to reflect, in use, a second laser pulse LP2 incident thereupon, thereby defining, at least in part, a second optical path P2 through the optical transmission medium M. In this way, the first laser pulse may be used to ignite the fuel in a first combustor of the gas turbine, as described above, and the second laser pulse may be used to similarly ignite the fuel in a second, different combustor of the gas turbine, similarly.

In this example, the optical member 60 comprises a scanning galvanometric mirror 60, as described previously.

In this example, the apparatus 50 comprises a controller 70 (not shown) arranged to control the optical member 60, as described above.

In this example, the apparatus 50 comprises a first mirror 80A (i.e. a first reflective optical member) arranged to reflect, in use, the reflected first laser pulse LP1 incident thereupon, upon reflection by the optical member 60 arranged in the first configuration, thereby defining, at least in part, the first optical path P1 through the optical transmission medium M to the gas turbine. In this example, the apparatus 50 comprises another first mirror 80A' (i.e. a plurality of first reflective optical members) arranged to reflect, in use, the reflected first laser pulse LP1 incident thereupon, upon reflection by the optical member 60 arranged in the first configuration, thereby defining, at least in part, the first optical path P1 through the optical transmission medium M to the gas turbine.

In this example, the apparatus 50 comprises a second mirror 80B, similar to the first mirror 80A, arranged to reflect, in use, the reflected second laser pulse LP2 incident thereupon, upon reflection by the optical member 60 arranged in the second configuration, thereby defining, at least in part, the second optical path P2 through the optical transmission medium M to the gas turbine. In this example, the apparatus 50 comprises another second mirror 80B' (i.e. a plurality of second reflective optical members).

In this example, the optical member 60 is arrangeable in 6 (i.e. N) configurations to reflect respectively, in use, N laser pulses incident thereupon, thereby defining, at least in part, N optical paths through the optical transmission medium to the gas turbine, where N is 6. In this example, N is equal to the number of combustors in the gas turbine. In this example, the apparatus 50 comprises N reflective optical members 80A - 80F, as described above, for the N configurations, respectively.

In this example, the optical member 60 is rotatably arrangeable about an axis. In this example, the optical member 60 is rotatably arrangeable with a resolution of 14 µrad. In this example, the optical member is rotatably arrangeable with a range of motion of 40°. In one example, the optical member is rotatably arrangeable with a response time of 400 µs. In this example, the optical member has a laser-induced damage threshold (LIDT) of 5 Jcm⁻².

In this example, the first laser pulse LP1 is provided by a Q-switched solid state laser 90. In this example, the first laser pulse LP1 and the second laser pulse LP2 have a wavelength of 1064 nm, a duration of 4 ns and an energy of 290 mJ. The laser 90 is arranged to provide such pulses, for example the first laser pulse LP1 and the second laser pulse LP2, at a rate of 10 Hz.

The apparatus 50 comprises a frame 91, upon which the optical member 60 and the N reflective optical members 80A - 80F are mounted in predetermined positions. The apparatus 50 comprises a plurality of additional optical elements 92A - 92F, arranged to interact with laser pulses incident thereupon. The optical element 92A is a ½ wave plate. The optical element 92A is a polarizing beam splitting cube. The optical elements 92A and 92B are used to attenuate the laser power. The optical elements 92C - 92F are mirrors, as described with respect to the N reflective optical members 80A - 80F.

In use, the first laser pulse LP1 is provided by the laser 90 and transmitted along the first optical path P1 through the optical transmission medium M to the gas turbine, sequentially via the optical elements 92A to 92F, the optical member 60 arranged in the first configuration, the mirrors 80A and 80A' and hence to a first combustor of the gas turbine. The optical member 60 is subsequently moved to the second configuration. The second laser pulse LP2 is provided by the laser 90 and transmitted along the second optical path P2 through the optical transmission medium M to the gas turbine, sequentially via the optical elements 92A to 92F, the optical member 60 arranged in the first configuration, the mirrors 80B and 80B' and hence to a second combustor of the gas turbine.

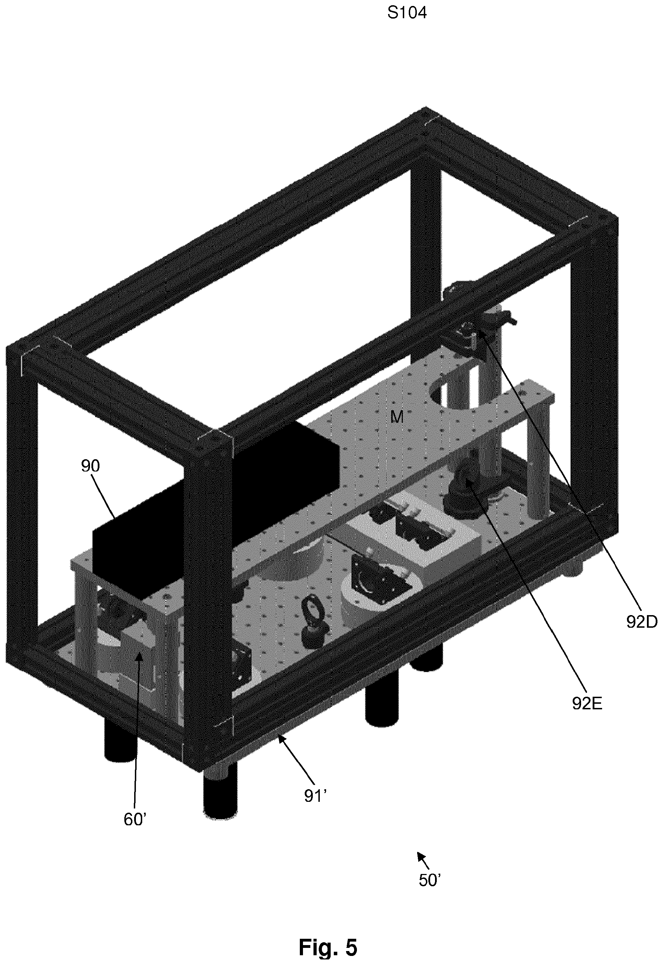

Figure 5 schematically depicts a perspective view of another optical apparatus 50' according to an exemplary embodiment. The optical apparatus 50' is similar to the optical apparatus 50 described above and like features are indicated with like reference signs, description of which is not repeated for brevity.

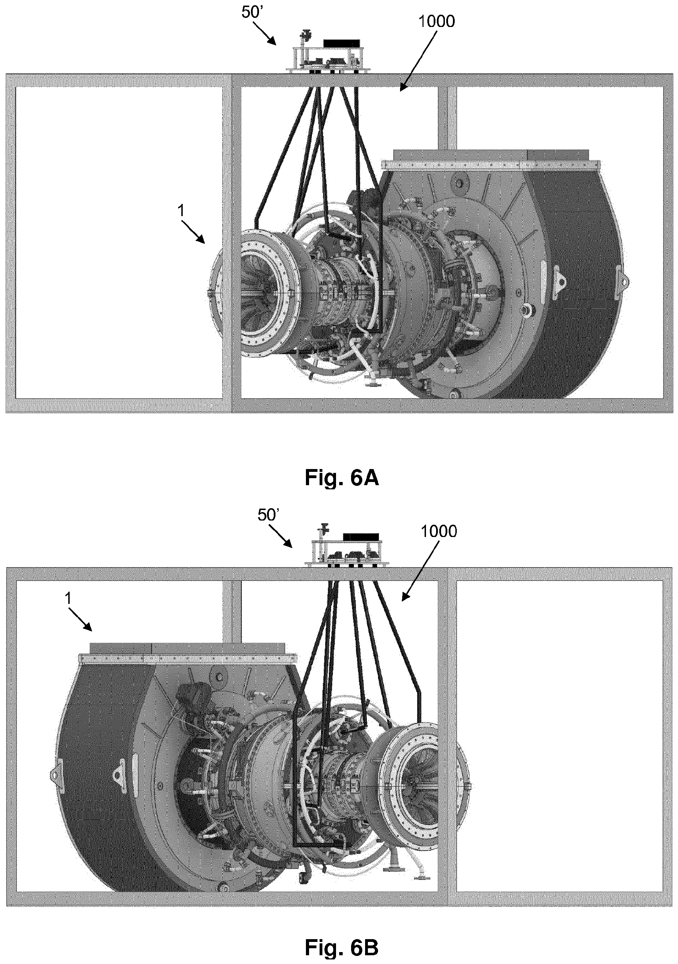

Figures 6A and 6B schematically depict left and right perspective views of a gas turbine 1 comprising an optical assembly 1000 comprising the optical apparatus 50' of Figure 5, according to an exemplary embodiment.

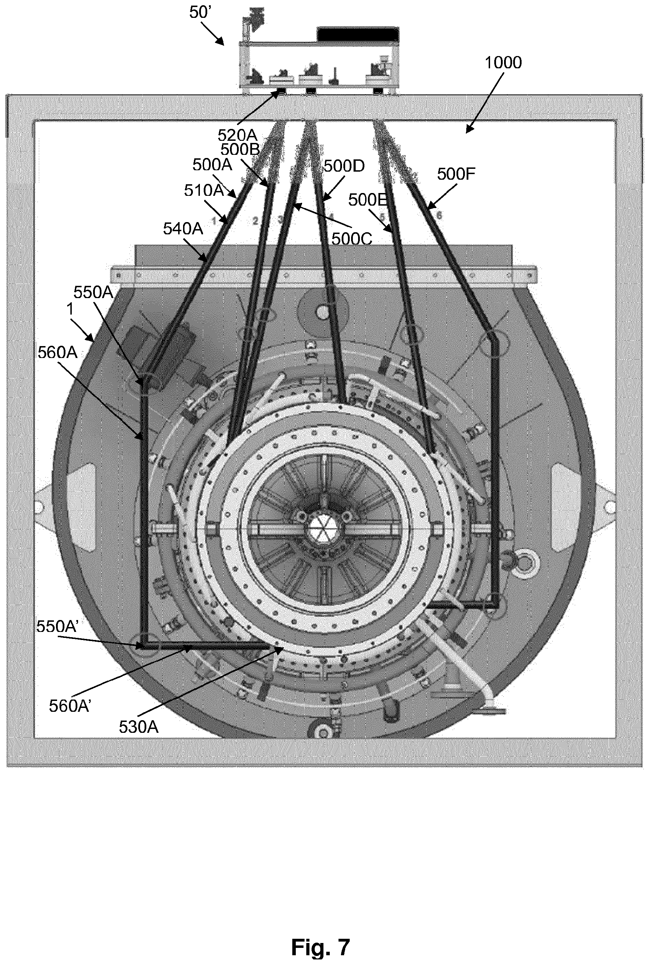

Figure 7 schematically depicts a front elevation view of the gas turbine 1 comprising the optical assembly 50' of Figures 6A and 6B.

Generally, the gas turbine 1 is similar to the gas turbine described with respect to Figures 1 and 2A - 2B, description of which is not repeated for brevity.

The optical assembly 1000 is for the gas turbine 1 for ignition of fuel therein. The assembly 1000 comprises the optical apparatus 50', as described above. The assembly 1000 comprises a first housing 500A arranged to house, at least in part, the optical transmission medium M along the first optical path P1.

That is, the first housing 500A provides an inlet passageway for the first laser pulse LP1 transmitted therethough in the optical transmission medium M along the first optical path P1. In this example, the first housing 500A comprises a pipe 510A having a circular cross-section (i.e. a tubular member). The first housing 500A comprises an optical inlet comprising an inlet passageway 520A, whereby the first housing 500A is in fluid communication with the optical apparatus 50'. In this example, the first housing 500A comprises an optical outlet 530A for the first laser pulse transmitted to the gas turbine. In this example, the first housing 500A comprises no other optical inlets and/or outlets.

In this example, the first housing 500A is mechanically coupled to the optical apparatus 50' at one end having the optical inlet 520A therein. In this example, the first housing 500A is coupled to the gas turbine 1 at an opposed end thereof, having the optical outlet 530A, therein.

In this example, the first housing 500A comprises a first coupling member 550A arranged to moveably couple a first part 540A of the first housing 500A and a second part 560A of the first housing 500A. In this example, the first coupling member 550A is arranged to rotatably couple the first part 540A of the first housing 500A and the second part 560A of the first housing 500A, whereby relative rotation of the first part 540A of the first housing 500A and the second part 560A of the first housing 500A about a transverse axis thereto, for example orthogonal to a longitudinal axis thereof, is provided. In other words, the first housing 500A is an articulatable first housing 500A. In this example, the first coupling member 550A is arranged to define a first axis of rotation about which the first part 540A of the first housing 500A and the second part 560A of the first housing 500A are mutually rotatably or angularly displaced. That is, the first coupling member 550A provides an elbow joint, articulatable in one plane.

In this example, the first housing 500A comprises a first articulatable reflective optical member 570A (not shown) arranged to reflect the first laser pulse LP1, thereby defining, at least in part, the first optical path P1 through the optical transmission medium M therein. In this example, the first articulatable reflective optical member 570A is arranged in the first coupling member 550A to reflect the first laser pulse LP1 along the first optical path P1 from the first part 540A of the first housing 500A into the second part 560A of the first housing 500A.

In this example, the optical member 60 is arrangeable in N configurations to reflect respectively, in use, N laser pulses incident thereupon, thereby defining, at least in part, N optical paths through the optical transmission medium to the gas turbine 1, where N is 6, and the assembly comprises N respective first housings 500A - 500F, as described above with respect to the first housing 500A.

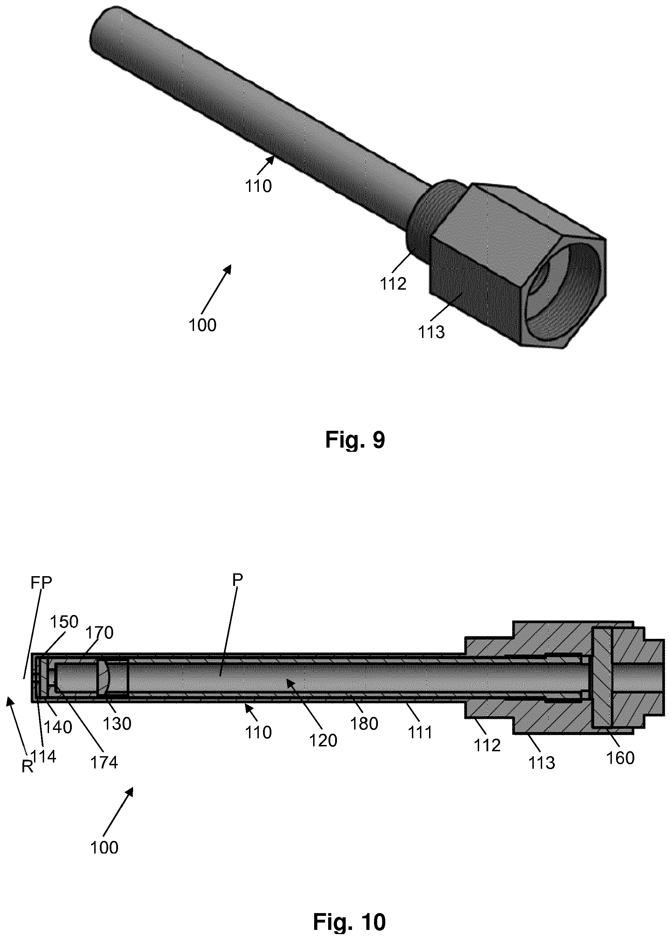

In this example, the assembly 1000 comprises a first optical probe 100A arranged to, in use, define a first optical focal point of the reflected first laser pulse LP1 within the gas turbine 1 for ignition of the fuel in a first region R therein, as described below in more detail with reference to Figures 9 - 11.

In one example, the assembly comprises N optical probes 100A - 100F, as described above with respect to the first optical probe 100A, for N first housings 500A - 500F, respectively.

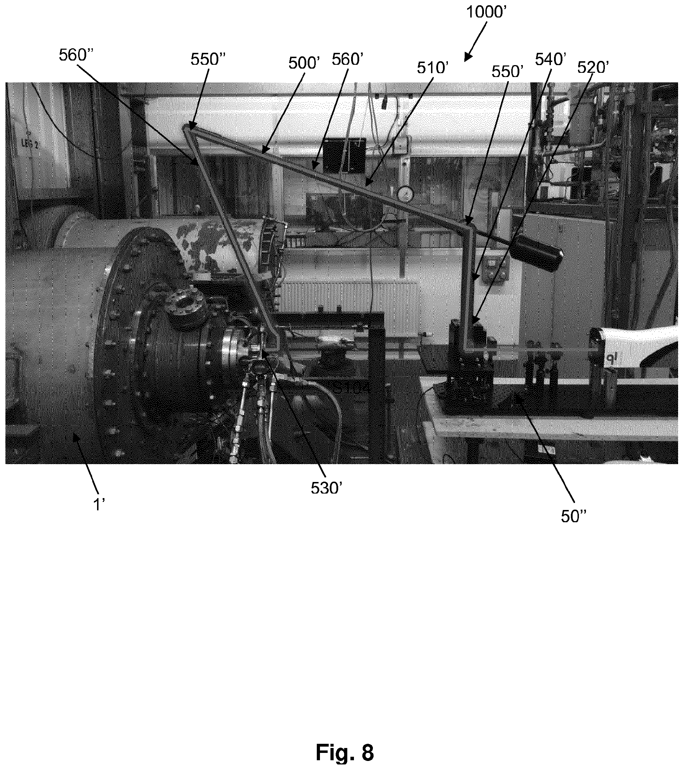

Figure 8 shows a photograph of a part of another optical assembly 1000' according to an exemplary embodiment, in use.

In detail, Figure 8 shows the part of the optical assembly 1000' for a gas turbine 1' for ignition of fuel therein, the assembly 1000' comprising a simplified optical apparatus 50" and a first housing 500' arranged to house, at least in part, the optical transmission medium along the first optical path. In this example, an optical member 60 is omitted from the simplified optical apparatus 50", so as to demonstrate use of the first housing 500'. The first housing 500' comprises a first coupling member 550' arranged to moveably couple a first part 540' of the first housing 500' and a second part 560' of the first housing 500'. The first coupling member 550' is arranged to rotatably couple the first part 540' of the first housing 500' and the second part 560' of the first housing 500'.

Figures 9 and 10 schematically depict an optical probe 100, such as the optical probes 100A - 100F, according to an exemplary embodiment. Particularly, Figure 9 schematically depicts a perspective view of the optical probe 100 and Figure 10 schematically depicts a longitudinal cross-sectional view of the optical probe 100.

The optical probe 100 is for a gas turbine, for example the gas turbine as described with reference to Figure 1 and Figures 2A to 2B. The probe 100 comprises a body 110 having a passageway 120 arranged therethrough to define an optical path P. The probe 100 comprises an optical focussing member 130 arranged in the passageway 120 to define an optical focal point FP in a region R therebeyond. The probe 100 comprises a first optical window 140 arranged in the passageway 120 between the optical focussing member 130 and the optical focal point FP. The probe 100 comprises a first sealing member 150 arranged between the first optical window 140 and the body 110 to isolate the passageway 120 from the region R.

In this way, the probe 100 may be provided through an aperture or casing wall of the gas turbine and/or combustor hardware, enabling laser ignition of fuel therein, for example. In this way, reliability of (re-)starting the gas turbine may be improved.

Generally, a size of the probe 100 generally corresponds with a size of a conventional electrical igniter for the gas turbine. The probe 100 may be physically and/or functionally interchangeable with conventional high energy spark igniters.

In more detail, the body 110 comprises an elongate body 110, having a length of about 150 mm, arranged to extend through, for example completely through, an aperture or casing wall of the gas turbine and/or combustor hardware. The body 110 comprises a tubular portion 111, having a circular cross-section, having an external diameter of 12 mm and a wall thickness of 1 mm. The tubular portion 111 has an open end and a partially closed end, the partially closed end having a central aperture 114 therethrough, the central aperture 114 having a diameter of 2 mm. The body 110 is formed from Inconel 600 (i.e. a heat-resistant material). The body 110 comprises an externally threaded portion 112, having a diameter greater than that of the tubular portion 111, arranged towards an opposed end of the body 110 with respect to the first optical window 140. The externally threaded portion 112 corresponds with an externally threaded portion of a conventional electrical igniter. The body 110 comprises a nut 113, having a hexagonal cross-section, for tightening the probe 100 into a corresponding internally threaded portion in the gas turbine. The body 110 comprises an internally threaded portion 113 at the opposed end of the body 110 with respect to the first optical window 140, for coupling the probe 100 to a housing 500, for example the first housing 500A. The probe 100 comprises a second optical window 160 arranged in the passageway 120.

The optical focussing member 130 is a plano-convex lens 130, having an effective focal length of typically 18 mm. The first optical window 140 is a planar optical window 140, formed from fused silica. The first sealing member 150 is a gasket (i.e. a sheet material), having an aperture therethrough, formed from Thermiculite 815 or similar resilient proprietary materials with high temperature sealing properties to withstand the local environment temperature and pressure conditions, as described previously.

The probe 100 comprises a spacing member 170 arranged to define a spacing between the optical focussing member 130 and the first optical window 140. Particularly, the spacing member 170 is arranged between the optical focussing member 130 and the first optical window 140 and is in contact with the optical focussing member 130 and the first optical window 140. The spacing member 170 is tubular, having an open end and a partially closed end, the partially closed end having a central aperture 174 therethrough.

The probe includes an inner plug 180 (also known as a locking screw), arranged to line the passageway 120 to positively locate the optical focussing member 130 and the first optical window 140 and maintain adequate forces for effective sealing.

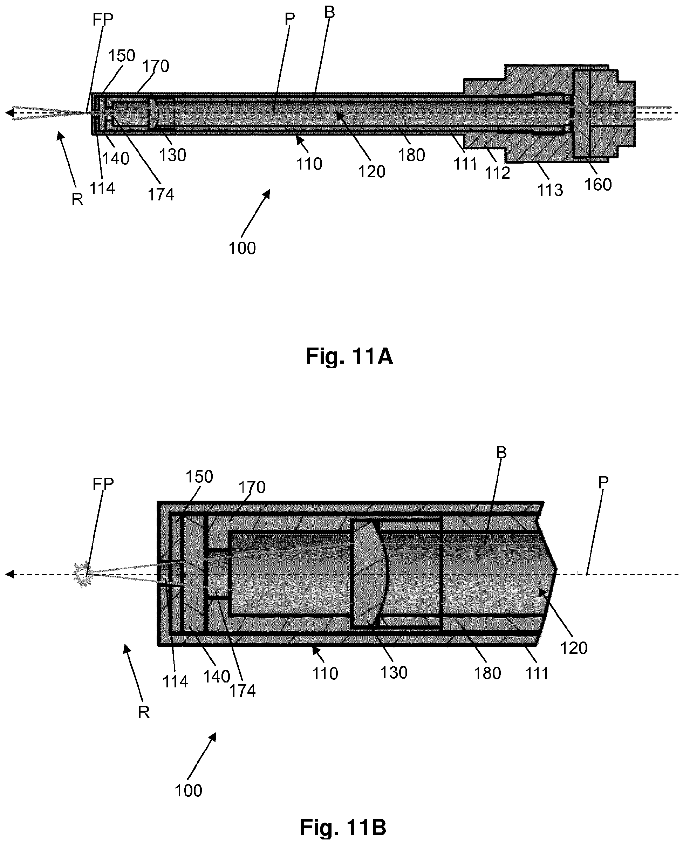

Figures 11A and 11B schematically depict the optical probe 100 of Figure 10, in use. Particularly, Figure 11A schematically depicts a longitudinal cross-sectional view of the optical probe 100, in use, as described with respect to Figure 11B. Figure 11B schematically depicts an enlarged part of the longitudinal cross-sectional view of Figure 11A.

In more detail, a laser beam B (i.e. a plurality of pulses) having a diameter of typically 6 mm is transmitted through the second optical window 160 into the passageway 120 and focused by the optical focussing member 130 through the first optical window 140 at the focal point FP in the region R, approximately 4 mm from an end of the body 110. In this way, fuel in the gas turbine may be ignited and/or a fuel quality of the fuel therein determined by LIBS.

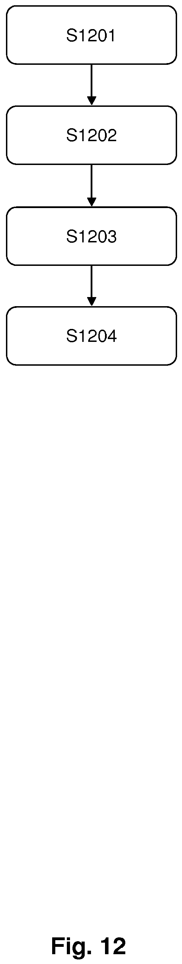

Figure 12 schematically depicts a method of installing an optical assembly, such as the optical assembly 1000, in a gas turbine comprising a first electrical igniter, according to an exemplary embodiment.

At S1201, the first electrical igniter is removed from the gas turbine, for example by unscrewing the first electrical igniter from a first threaded aperture therein.

At S1202, the removed first electrical igniter is replaced with the first optical probe, for example by screwing the probe into the same first threaded aperture.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features having different dimensions.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An optical apparatus (50) for a gas turbine (1) for ignition of fuel therein, the apparatus (50) comprising:
an optical member (60) arrangeable in a first configuration to reflect, in use, a first laser pulse (LP1) incident thereupon, thereby defining, at least in part, a first optical path (P1) through an optical transmission medium (M);
wherein the optical transmission medium (M) comprises an optically homogeneous transmission medium, preferably a gas.

2. The apparatus (50) according to claim 1, wherein the optical member (60) is arrangeable in a second configuration to reflect, in use, a second laser pulse (LP2) incident thereupon, thereby defining, at least in part, a second optical path (P2) through the optical transmission medium (M).

3. The apparatus (50) according to any of claim 1 to claim 2, wherein the optical member (60) comprises a galvanometric mirror.

4. The apparatus (50) according to any of claims 1 to 3, comprising:
a controller (70) arranged to control the optical member (60).

5. The apparatus (50) according to any of claims 1 to 4, comprising:
a first reflective optical member (80A) arranged to reflect, in use, the reflected first laser pulse (LP1) incident thereupon.

6. An optical assembly (1000) for a gas turbine (1) for ignition of fuel therein, the assembly (1000) comprising:
an optical apparatus (50) according to any previous claim; and
a first housing (500A) arranged to house, at least in part, the optical transmission medium (M) along the first optical path (P1).

7. The assembly (1000) according to claim 6, wherein the first housing (500A) comprises a first coupling member (550A) arranged to moveably couple a first part (540A) of the first housing (500A) and a second part (560A) of the first housing (500A).

8. The assembly (1000) according to claim 7, wherein the first coupling member (550A) is arranged to rotatably couple the first part (540A) of the first housing (500A) and the second part (560A) of the first housing (500A).

9. The assembly (1000) according to any of claims 7 to 8, the first housing (500A) comprising:
a first articulatable reflective optical member (570A) arranged to reflect the reflected first laser pulse (LP1), thereby defining, at least in part, the first optical path (P1) through the optical transmission medium (M).

10. The assembly (1000) according to claim 9, wherein the first articulatable reflective optical member (570A) is arranged in the first coupling member (550A).

11. The assembly (1000) according to any of claims 6 to 10, comprising:
a first optical probe (100A) arranged to, in use, define a first optical focal point of the reflected first laser pulse (LP1) within the gas turbine (1) for ignition of the fuel in a first region (R) therein.

12. The assembly (1000) according to claim 11, wherein the first optical probe (100A) comprises:
a body (110) having a passageway (120) arranged therethrough;
an optical focussing member (130) arranged in the passageway (120) to define the first optical focal point (FP) in the first region (R) therebeyond; and
a first optical window (140) arranged in the passageway (120) between the optical focussing member (130) and the first optical focal point (FP);
wherein the first optical probe (100A) comprises a first sealing member (150) arranged between the first optical window (140) and the body (110) to isolate the passageway (120).

13. The assembly (1000) according to any of claims 6 to 12, comprising:
a laser (90) arranged to provide the first laser pulse (LP1), the first laser pulse (LP1) having an energy in a range from 1 mJ to 1000 mJ.

14. A gas turbine (1) comprising an optical apparatus (50) according to any of claims 1 to 5 and/or an optical assembly (1000) according to any of claims 6 to 13.

15. A method of installing an optical assembly according to any of claims 11 to 13 in a gas turbine comprising a first electrical igniter, the method comprising:
removing the first electrical igniter from the gas turbine (S1201); and
replacing the removed first electrical igniter with the first optical probe (S1202).
